# EUROPÄISCHE PATENTANMELDUNG

(11) **EP 4 697 007 A1**
(43) Veröffentlichungstag der Anmeldung: **18.02.2026**
(21) Anmeldenummer: 24194665.6
(22) Anmeldetag: 14.08.2024
(51) Int. Cl.: G01N 11/04

(54) **VORRICHTUNG UND VERFAHREN ZUR BESTIMMUNG VON FLIESSEIGENSCHAFTEN EINES PULVERS ODER SCHÜTTGUTS IN UNTERSCHIEDLICHEN STRÖMUNGSREGIMES**

(71) Anmelder: Fraunhofer-Gesellschaft zur Förderung der angewandten Forschung e.V., 80686 München (DE)
(72) Erfinder: BIERWISCH, Claas, 79108 Freiburg (DE); FUCHS, Martin, 79108 Freiburg (DE); NAJUCH, Tim, 79108 Freiburg (DE); BAAB, Adrian, 79108 Freiburg (DE)
(74) Vertreter: Pfenning, Meinig & Partner mbB

(57) **Zusammenfassung**

Die Erfindung betrifft eine Vorrichtung zur Bestimmung von Fließeigenschaften eines Pulvers oder Schüttguts (2) in unterschiedlichen Strömungsregimes, umfassend ein Reservoir (1) zum Aufnehmen des Pulvers oder Schüttguts (2), mit einer schrägen Seitenwand (1a) und mit einer länglichen unteren Austrittsöffnung (1e), einen Schiebemechanismus (5) zum Verändern einer Breite (B) der unteren Austrittsöffnung (1e), eine unterhalb des Reservoirs (1) liegende Kammer (3), in der Hindernisse (4) unterhalb der unteren Austrittsöffnung (1e) so angeordnet sind, dass das durch die untere Austrittsordnung (1e) in die Kammer (3) fließende Pulver oder Schüttgut (2) mit den Hindernissen (4) interagiert, eine optische Erfassungsvorrichtung (7) zum Erfassen von Strömungsmustern des mit den Hindernissen interagierenden Pulvers oder Schüttguts (2). Die Erfindung betrifft auch ein Verfahren zur Verwendung der Vorrichtung.

## Beschreibung

Die Erfindung liegt auf dem Gebiet des Maschinenbaus. Sie betrifft eine Vorrichtung sowie ein Verfahren zur Bestimmung von Fließeigenschaften eines Pulvers oder Schüttguts in unterschiedlichen Strömungsregimes.

Ein Pulver oder Schüttgut kann in Abhängigkeit der vorliegenden Randbedingungen drei unterschiedliche Ausprägungen (Regimes) seines Strömungsverhaltens aufweisen. Dies ist erstens verdünnte granulare Strömung, zweitens dichte und schnelle granulare Strömung und drittens quasistatische granulare Strömung. Die Regimes unterscheiden sich in dem Volumenfüllgrad des Schüttguts, welcher vom verdünnten zum quasistatischen Fall zunimmt. Weiterhin unterscheiden sie sich im vorherrschenden Druck, welcher vom verdünnten bis zum quasistatischen Regime steigt. Zuletzt lassen sich die Regimes nach der im Schüttgut vorliegenden Scherrate differenzieren, welche vom verdünnten bis zum quasistatischen Regime sinkt.

Um das Verhalten eines gegebenen Schüttguts in verfahrenstechnischen Prozessen und Anlagen durchgehend beschreiben zu können, bedarf es einer umfassenden Charakterisierung des Schüttguts, bei der Eigenschaften aus den drei oben genannten Regimes erfasst werden. Dies ist z.B. das Rückstoßverhalten einzelner, frei fliegender Partikel beim Stoß miteinander bzw. mit einer Wandfläche in einer verdünnten Strömung. Bei dichteren Strömungen werden Kontakteigenschaften wie Kohäsion und Reibung zwischen den Partikeln relevanter. Weiterhin wird das Strömungsverhalten von geometrischen Eigenschaften wie Form und Größe der Partikel beeinflusst. Zudem hat das vorliegende Raumklima (relative Luftfeuchte, Temperatur) Auswirkungen auf das Strömungsverhalten.

Aus der Druckschrift WO 2016/181125 A1 ist eine Prüfvorrichtung bekannt, die eine Prüfkammer, eine Pulvermanipulationsvorrichtung, wie z. B. eine Verdichtungsvorrichtung, und eine Antriebsanordnung umfasst, die betrieben werden kann, um die Verdichtungsvorrichtung selektiv für eine axiale Bewegung und für eine Drehbewegung innerhalb der oder relativ zur Prüfkammer anzutreiben, wobei die Verdichtungsvorrichtung vorzugsweise mindestens eine vollständige Umdrehung eines im Allgemeinen schraubenförmigen Schneckengangs umfasst.

In der Druckschrift T. Heinze: A highly flexible laboratory setup to demonstrate granular flow characteristics, Natural Hazards 104 (2020) 1581-1596, wird erörtert, dass die Dynamik von Schneelawinen oder Erdrutschen durch schnelles granulares Fließen beschrieben werden kann. Laut dieser Druckschrift sind experimentelle Untersuchungen der Granulatströmung im Labormaßstab häufig erforderlich, um das Strömungsverhalten zu analysieren und geeignete mathematische und numerische Modelle zu entwickeln. Laut dieser Druckschrift verwenden die meisten Untersuchungen bildbasierte Analysen, und zusätzliche Sensoren wie Druckmessgeräte sind nicht immer möglich. Das Testen verschiedener Szenarien und Parametervariationen, wie z. B. unterschiedliche Hindernisformen und -positionen sowie Basistopographie und Reibung, erfordert in der Regel entweder den Bau eines neuen Laboraufbaus für jeden Versuch oder eine umständliche Rekonstruktion. In der Druckschrift wird ein Laboraufbau auf der Basis von LEGO-Steinen vorgestellt.

Aufgabe der vorliegenden Erfindung ist es, eine möglichst umfassende und genaue Charakterisierung der Fließeigenschaften eines Pulvers oder Schüttguts zu ermöglichen. In Anbetracht des Standes der Technik haben die vorliegenden Erfinder insbesondere die Notwendigkeit erkannt, einen Versuchsaufbau zu schaffen, mit dem Eigenschaften eines Schüttguts in allen drei Regimes ermittelt werden können.

Erreicht wird dies durch eine Vorrichtung gemäß Anspruch 1 sowie durch ein Verfahren gemäß dem nebengeordneten Anspruch. Vorteilhafte Ausführungsformen ergeben sich aus den abhängigen Ansprüchen sowie aus der nachfolgenden Beschreibung und den Figuren.

Demgemäß wird eine Vorrichtung zur Bestimmung von Fließeigenschaften eines Pulvers oder Schüttguts in unterschiedlichen Strömungsregimes vorgeschlagen. Sie umfasst ein Reservoir zum Aufnehmen des Pulvers oder Schüttguts mit einer schrägen Seitenwand und mit einer länglichen unteren Austrittsöffnung. Sie umfasst außerdem einen Schiebemechanismus zum Verändern einer Breite der unteren Austrittsöffnung. Sie umfasst außerdem eine unterhalb des Reservoirs liegende Kammer, in der Hindernisse unterhalb der unteren Austrittsöffnung so angeordnet sind, dass das durch die untere Austrittsordnung in die Kammer fließende Pulver oder Schüttgut mit den Hindernissen interagiert. Weiterhin umfasst die Vorrichtung eine optische Erfassungsvorrichtung zum Erfassen von Strömungsmustern des mit den Hindernissen interagierenden Pulvers oder Schüttguts.

Das anmeldungsgemäße Verfahren ist ein Verfahren zur Verwendung der hier beschriebenen Vorrichtung, wobei die Breite der unteren Austrittsöffnung sukzessive verändert wird.

Durch die Vorrichtung bzw. das Verfahren ist es möglich, die drei genannten Strömungsregimes in einem begrenzten Raum herbeizuführen. Insbesondere wird es ermöglicht die dafür benötigten stark unterschiedlichen Packungsdichten sowie die stark unterschiedliche Scherraten im Schüttgut herbeizuführen.

Dadurch kann vermieden werden, dass für die unterschiedlichen Regimes verschiedene Versuchsaufbauten genutzt werden müssen.

In einer Ausführungsform ist eine Länge der unteren Austrittsöffnung größer als die Breite der unteren Austrittsöffnung.

Es kann vorgesehen sein, dass der Schiebemechanismus dafür eingerichtet ist, einen Abstand zwischen der schrägen Seitenwand und einer der schrägen Seitenwand gegenüberliegenden Wand zu verändern, um die Breite der unteren Austrittsöffnung zu verändern. Dazu kann der Schiebemechanismus bspw. so eingerichtet sein, dass er die schräge Seitenwand verschiebt. Er kann aber auch so eingerichtet sein, dass er die der schrägen Seitenwand gegenüberliegende Wand verschiebt.

Die Breite der unteren Austrittsöffnung kann durch den eingestellten Abstand zwischen der schrägen Seitenwand und der der schrägen Seitenwand gegenüberliegenden Wand definiert sein, während die Länge orthogonal dazu gemessen wird und bspw. einer Länger der genannten Wände entspricht. Es kann vorgesehen sein, dass die Länge unveränderlich ist.

Der Schiebemechanismus kann optional dafür eingerichtet sein, eine Breite der unterhalb des Reservoirs liegenden Kammer zu verändern. Insbesondere kann es vorgesehen sein, dass eine Wand der Kammer zusammen mit der verschieblichen Wand des Reservoirs (schräge Seitenwand oder der schrägen Seitenwand gegenüberliegende Wand) verschiebbar ist, wobei vorzugsweise zusätzlich eine Verschiebbarkeit der verschieblichen Wand des Reservoirs gegenüber der Wand der Kammer vorgesehen ist. Bspw. kann die Kammerbreite optional zusammen mit der Breite der unteren Austrittsöffnung verändert werden und die Breite der unteren Austrittsöffnung kann optional auch unabhängig von der Kammerbreite verändert werden. Dies kann es beispielsweise ermöglichen, dass Pulver oder Schüttgut an der entsprechenden Wand der Kammer entlangrieseln oder -gleiten kann, anstatt bspw. von der Unterkante der jeweiligen Wand des Reservoirs frei zu fallen. In einem Beispiel sind die schräge Seitenwand des Reservoirs und eine darunterliegende Rückwand der Kammer durch den Schiebemechanismus gemeinsam verschiebbar, wobei zusätzlich die schräge Seitenwand des Reservoirs gegenüber der Rückwand verschiebbar ist.

Die Länge der unteren Austrittsöffnung kann beispielsweise mindestens 1 cm oder mindestens 5 cm oder mindestens 10 cm betragen. Alternativ oder zusätzlich kann sie bspw. höchstens 25 cm oder höchstens 20 cm betragen.

Es kann vorgesehen sein, dass die untere Austrittsöffnung durch den Schiebemechanismus vollständig verschließbar ist und mittels des Schiebemechanismus auf eine Breite von mindestens 10 mm einstellbar ist. Insbesondere ist vorzugsweise eine stufenlose Einstellbarkeit vorgesehen. Beispielsweise können Breiten von mindestens 20 mm einstellbar sein. Eine Maximalbreite, die durch den Schiebemechanismus einstellbar ist, kann beispielsweise 50 mm oder 40 mm betragen. Insbesondere kann vorgesehen sein, dass alle Breiten von 0 mm bis zur Maximalbreite stufenlos einstellbar sind.

Unterhalb der unteren Austrittsöffnung können eine oder mehrere Ablenkplatten angeordnet sein, die dafür eingerichtet sein können, das Pulver oder Schüttgut in Richtung der Hindernisse zu leiten, wobei die eine oder die mehreren Ablenkplatten vorzugsweise bewegbar sind. Dabei kann insbesondere ihr Neigungswinkel einstellbar sein. Die Ablenkplatten sind vorzugsweise spiegelsymmetrisch zueinander. Dadurch kann das rieselnde Schüttgut oder Pulver, das in eine erste Richtung auf die Breite der unteren Austrittsöffnung begrenzt ist, zusätzlich in eine senkrecht zur Breite liegende zweite Richtung begrenzt werden. Insbesondere können zwei Ablenkplatten vorgesehen sein, die symmetrisch zueinander angeordnet sind.

Optional kann ein Neigungswinkel der schrägen Seitenwand des Reservoirs verstellbar sein. Beispielsweise kann der Neigungswinkel der schrägen Seitenwand des Reservoirs gegenüber der Vertikalen mindestens 5° oder bevorzugt mindestens 10° betragen. Alternativ oder zusätzlich kann er bspw. höchstens 60° oder bevorzugt höchstens 45° betragen. Es kann z.B. vorgesehen sein, dass der Neigungswinkel Werte zwischen 5° oder 10° und 45° oder 60° annehmen kann.

Im Bereich der unteren Austrittsöffnung kann ein Sieb angeordnet oder anordenbar sein. Alternativ oder zusätzlich kann an einer Umrandung der unteren Austrittsöffnung ein Profil, insbesondere ein Zackenprofil oder Wellenprofil bereitstellbar sein. Dadurch kann das Schüttgut, bevor es auf die Hindernisse trifft, gesiebt oder aufgelockert werden.

Die Hindernisse können beispielsweise als Vorsprünge ausgebildet sein. Die Vorsprünge können bspw. aus Metall oder Kunststoff gebildet sein. Sie können z.B. 3D-gedruckt sein. Die Hindernisse in Form von Vorsprüngen können beispielsweise beheizt bzw. beheizbar sein. Bspw. können die Vorsprünge als elektrische Heizpatronen ausgebildet sein. Die Vorsprünge können insbesondere an einer Rückwand der Kammer angeordnet und/oder befestigt sein.

Die Vorrichtung kann ein oder mehrere Anordnungen zum Erzeugen von Luftströmen, insbesondere im Inneren der Kammer, umfassen. Die Luftströme können als alternative oder zusätzliche Hindernisse (bspw. zusätzlich oder alternativ zu den Vorsprüngen) dienen und/oder sie können zur Regulierung von Temperatur und/oder Luftfeuchtigkeit und/oder Thermik dienen. Bspw. kann die Zuführung von heißer Luft vorgesehen sein. Die Luft kann bspw. zwischen 50° C und 200°C warm sein.

Bspw. können Luftdüsen bereitgestellt sein, die einen Luftstrom erzeugen, der bspw. nach oben gerichtet ist, entgegen der Rieselrichtung des herunterrieselnden Pulvers oder Schüttguts. Dadurch können die Hindernisse realisiert sein. Die Luftdüsen können bspw. auch in als Vorsprünge ausgebildete strukturelle Hindernisse integriert sein. So können die Vorsprünge bspw. hohl sein und/oder Schlitze zur Luftführung sowie Auslässe aufweisen. Die Luftdüsen bzw. die mit Luftdüsen ausgestatteten Vorsprünge können insbesondere 3D-gedruckt sein. Bspw. können die Luftdüsen aus einem wärmebeständigen 3D-Kunststoff hergestellt sein.

Die Kammer kann beispielsweise geneigt oder neigbar sein, so dass das aus der Austrittsöffnung in die Kammer fließende Pulver oder Schüttgut an einer Rückwand der Kammer entlanggleitet. Dafür kann die Kammer bspw. drehbar gelagert sein oder seitliche Stützfüße aufweisen. Beispielsweise kann die Kammer eine seitliche verstellbare Aktorik aufweisen, wie z.B. längenverstellbare seitliche Stützfüße.

Eine Vorderwand und/oder eine Rückwand der Kammer können transparent ausgestaltet sein. Indem zumindest eine der Wände transparent ausgestaltet ist, kann mittels der optischen Erfassungsvorrichtung die Beobachtung des rieselnden Pulvers oder Schüttguts durch die transparente Wand hindurch erfolgen. Außerdem kann eine Beleuchtung durch eine transparente Wand hindurch erfolgen, indem eine Beleuchtungsvorrichtung so angeordnet wird, dass sie durch die Wand hindurch das Pulver oder Schüttgut beleuchtet. Die Beleuchtung kann durch dieselbe transparente Wand erfolgen wie die Beobachtung bzw. Erfassung, oder durch die gegenüberliegende Wand, wenn diese ebenfalls transparent ausgestaltet ist.

Die Vorrichtung, insbesondere die Wände des Reservoirs und/oder die Wände der Kammer und/oder die Hindernisse können vorzugsweise aus Materialien hergestellt sein, die eine elektrostatische Aufladung im Schüttgut bzw. in den Vorrichtungsmaterialien ausschließen oder weitgehend vermeiden, um ein Verhalten des Schüttguts möglichst nicht zu beeinflussen. Beispielsweise können die Wände aus einem leitfähigen Material, wie z.B. Aluminium oder Edelstahl, gefertigt sein, wobei die Wände vorzugsweise geerdet sind. Die Wände können bspw. auch aus antistatischem Kunststoff (bspw. ESLON^{®}) gefertigt sein. Beispielsweise können die Vorderwand und/oder Rückwand der Kammer, wenn sie transparent ausgestaltet sind, aus Echtglas gebildet sein. Dabei kann bspw. eine Beschichtung vorgesehen sein. Die mögliche Beschichtung kann zum Beispiel Silber enthalten und/oder sie kann leitfähige Fasern enthalten, die insbesondere als Nanofasern ausgeführt sein können. Transparente Wände können auch durch einen antistatischen Kunststoff (bspw. ESLON^{®}), insbesondere durch ein antistatisches transparentes Polycarbonat verwirklicht sein.

Die Vorrichtung kann eine mit der optischen Erfassungsvorrichtung verbundene Auswerteeinheit umfassen, die eingerichtet ist zum Analysieren und/oder Kategorisieren der erfassten Strömungsmuster. Diese kann mit einer Steuer und Kontrolleinheit für den Schiebemechanismus verbunden sein. Sie kann dafür eingerichtet sein, Werte für eine eingestellte Breite der unteren Austrittsöffnung und/oder Werte für einen eingestellten Winkel der schrägen Seitenwand und/oder Werte für eine eingestellte Position der Ablenkplatten zu erhalten und für die Analyse und/oder Kategorisierung zu berücksichtigen. Sie kann auch dafür eingerichtet sein, diese Werte in Abhängigkeit einer Analyse einzustellen oder zu regeln.

Bei dem Verfahren zur Verwendung der Vorrichtung wird, wie erwähnt, die Breite der unteren Austrittsöffnung sukzessive verändert.

Es sei betont, dass Aspekte, die hier im Zusammenhang mit dem Verfahren erläutert sind, auch für die Vorrichtung beansprucht werden können und umgekehrt.

Bei dem Verfahren kann die untere Austrittsöffnung zunächst vollständig verschlossen und das Reservoir mit dem Pulver oder Schüttgut befüllt werden.

Während eines Versuchsdurchlaufs wird beispielsweise mittels des Schiebemechanismus die untere Austrittsöffnung geöffnet und auf eine erste Breite eingestellt. Für die erste Breite wird ein Strömungsmuster erfasst. Anschließend wird beispielsweise mittels des Schiebemechanismus die untere Austrittsöffnung verändert, insbesondere z.B. vergrößert, und auf eine zweite Breite eingestellt. Das Reservoir kann vor dem Einstellen der Breite optional neu gefüllt werden, oder eine neue Füllung kann entfallen wenn noch genug Pulver oder Schüttgut im Reservoir enthalten ist. Es wird dann ein Strömungsmuster für die zweite Breite erfasst. Optional können weitere Breiten (dritte, vierte, fünfte Breiten usw.) folgen. Vorzugsweise wird die Breite sukzessive vergrößert, z.B. in Schritten im Millimeterbereich (z.B. Schritten zwischen 1 mm und 3 mm).

Während eines Versuchsdurchlaufs oder zwischen zwei Versuchsdurchläufen kann ein Neigungswinkel der schrägen Seitenwand und/oder ein Neigungswinkel der einen oder mehreren Ablenkplatten, die unterhalb der unteren Austrittsöffnung angeordnet sind, verändert werden.

Außerdem kann es vorgesehen sein, während eines Versuchsdurchlaufs oder zwischen zwei Versuchsdurchläufen raumklimatische Bedingungen wie z.B. die Temperatur und/oder die Luftfeuchtigkeit zu ändern. Dazu kann ein Gehäuse oder eine Ummantelung für die Vorrichtung vorgesehen sein, in der die Temperatur und/oder die Luftfeuchtigkeit einstellbar sind. So kann der Einfluss solcher Parameter auf das Rieselverhalten untersucht werden.

Nachfolgend wird die Erfindung beispielhaft anhand der beigefügten Figuren erläutert.

Darin zeigen:
- Fig. 1: eine perspektivische Vorderansicht einer Vorrichtung zur Bestimmung von Fließeigenschaften eines Pulvers oder Schüttguts,
- Fig. 2: eine perspektivische Rückansicht der Vorrichtung,
- Fig. 3: eine perspektivische Seitenansicht der Vorrichtung, mit geöffneter Seite,
- Fign. 4a, b: perspektivische Vorderansichten der Vorrichtung, mit geöffneter Vorderseite, ohne und mit Sieb,
- Fig. 5: eine Draufsicht auf die Vorderseite der Vorrichtung, mit geöffneter Vorderseite, und
- Fign. 6a, b: in der Vorrichtung erzeugte Strömungsmuster.

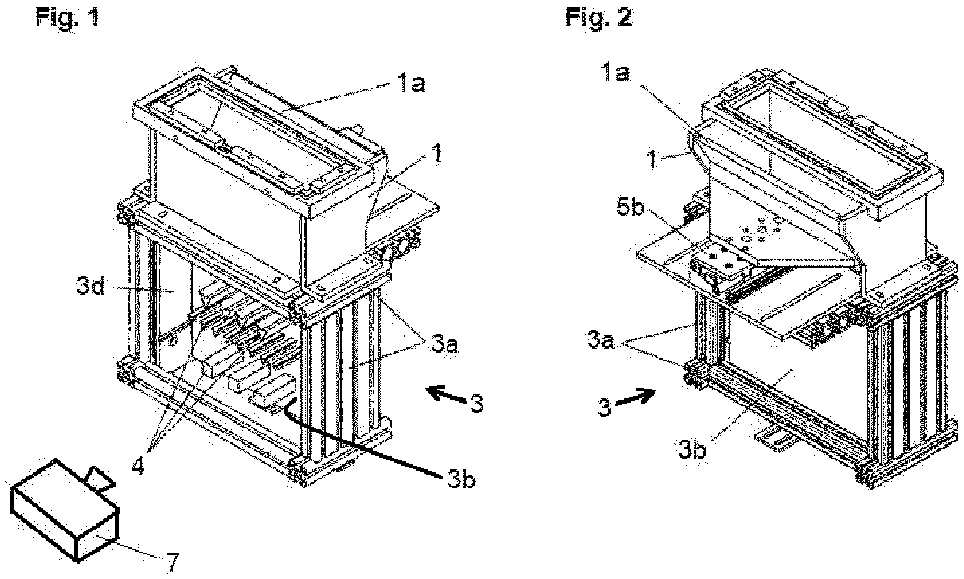

Die Figuren 1 bis 5 zeigen unterschiedliche Ansichten einer Vorrichtung zur Bestimmung von Fließeigenschaften eines Pulvers oder Schüttguts in unterschiedlichen Strömungsregimes.

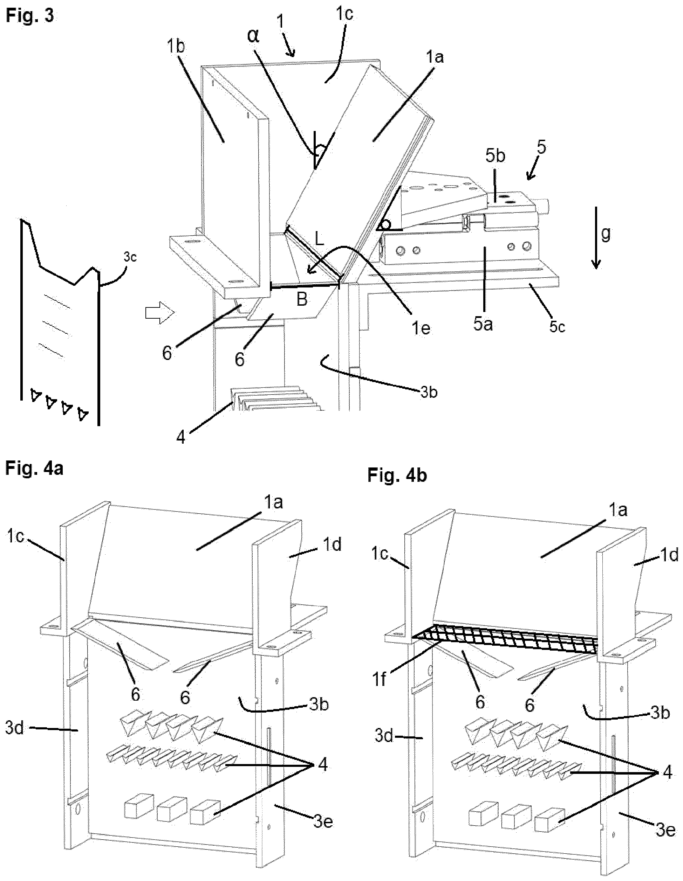

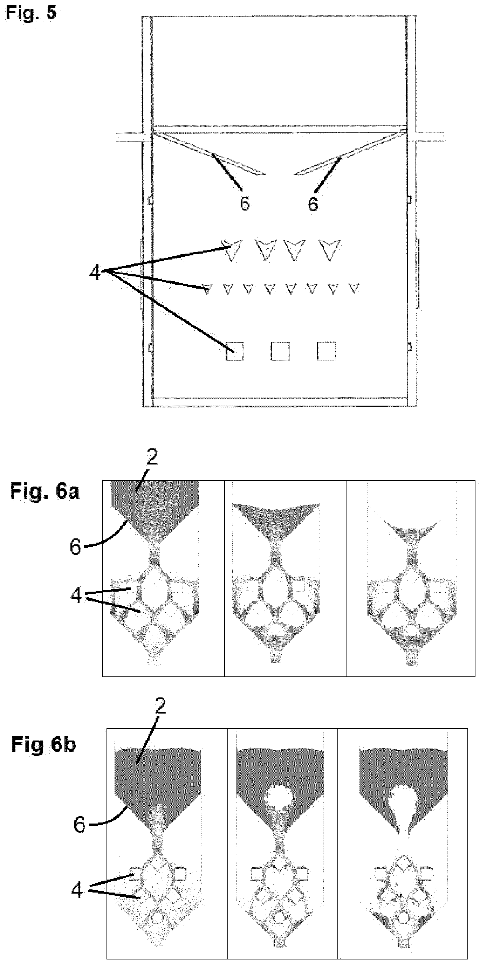

Die Vorrichtung umfasst ein in einem oberen Abschnitt angeordnetes Reservoir 1 zum initialen Aufnehmen des Pulvers oder Schüttguts (Pulver oder Schüttgut sind zur besseren Übersichtlichkeit in den Figuren 1-5 nicht gezeigt, siehe hierzu aber bspw. Figuren 6a - 6b, dort Bezugszeichen 2). Aus dem Reservoir 1 kann das Pulver oder Schüttgut bedingt durch die Schwerkraft g (vgl. Fig. 3) nach unten rieseln, um mit einer Anordnung von Hindernissen 4 zu interagieren. Bei der Interaktion entstehen Strömungsmuster (vgl. Figuren 6a -6b), die mittels einer optischen Erfassungsvorrichtung 7 erfasst werden können, und die Aufschluss über die Strömungseigenschaften des Pulvers oder Schüttguts geben können.

Um die Interaktion mit den Hindernissen 4 zu ermöglichen, ist unterhalb des Reservoirs 1 eine Kammer 3 angeordnet, in der die Hindernisse 4 so angeordnet sind, dass das in die Kammer strömende Pulver oder Schüttgut mit den Hindernissen 4 interagiert. Die Kammer 3 hat beispielhaft eine Rahmenstruktur 3a, in die Wände eingesetzt sind. Im vorliegenden Beispiel sind die Hindernisse 4 als Vorsprünge ausgebildet, die an einer Rückwand 3b der Kammer angeordnet sind. Eine erste Kammerseitenwand 3d und eine zweite Kammerseitenwand 3e können die Kammer stabilisieren und verhindern, dass das Pulver oder Schüttgut seitlich entweicht. Die Kammer 3 kann an der Vorderseite offen sein, oder durch eine vorzugsweise transparente Vorderwand 3c verschließbar sein, um die Erfassung mittels der optischen Erfassungsvorrichtung 7 zu ermöglichen.

Das Reservoir 1 umfasst eine schräge Seitenwand 1a, eine der schrägen Seitenwand 1a gegenüberliegende Wand 1b sowie eine erste Seitenwand 1c und eine zweite Seitenwand 1d. Unterkanten der vier Wände begrenzen eine längliche untere Austrittsöffnung 1e. Eine Breite B der unteren Austrittsöffnung 1e ist bei der vorgestellten Vorrichtung veränderbar. Dazu umfasst die Vorrichtung einen Schiebemechanismus 5, der insbesondere in den Figuren 2 und 3 gut erkennbar ist.

Der Schiebemechanismus umfasst beispielhaft eine Platte 5c mit Langlöchern. Darauf ist ein Schlittenmechanismus befestigt, der einen feststehenden Schlittenteil 5a und einen beweglichen Schlittenteil 5b umfasst. Der bewegliche Schlittenteil 5b ist im gezeigten Beispiel mit der schrägen Seitenwand 1a des Reservoirs 1 verbunden. Indem z.B. der bewegliche Schlittenteil 5b gegenüber der Platte 5c und dem feststehenden Schlittenteil 5a verschoben wird (nach links und rechts, unter Bezugnahme auf Fig. 3), kann die schräge Seitenwand so auf die gegenüberliegende Wand zu bzw. von ihr weg bewegt werden, dass die Breite B der unteren Austrittsöffnung 1e verkleinert bzw. vergrößert wird. Der Schiebemechanismus weist einen präzisen Antrieb, bspw. in Form eines elektrischen Linearmotors auf. Der Schiebemechanismus 5 ermöglicht es also, den Abstand zwischen der schrägen Seitenwand 1a und der der schrägen Seitenwand 1a gegenüberliegenden Wand 1b zu verändern, um die Breite B der unteren Austrittsöffnung 1e zu verändern und präzise einzustellen. Dabei ist die untere Austrittsöffnung 1e durch den Schiebemechanismus 5 vollständig verschließbar. Mittels des Schiebemechanismus 5 lässt sich die Breite B stufenlos auf von 0 mm mindestens 10 mm einstellen - im vorliegenden Fall auf bis zu 40 mm.

Die Länge L der unteren Austrittsöffnung 1e ist dabei größer als ihre Breite B. Die Länge L beträgt zwischen 10 cm und 25 cm, während die Breite zwischen 0 mm und 40 mm einstellbar ist.

Der Schiebemechanismus 5 ist zusätzlich dafür eingerichtet, eine Breite der unterhalb des Reservoirs 1 liegenden Kammer 3 zu verändern. Diese Breite wird in die gleiche Richtung gemessen, wie die Breite B der unteren Austrittsöffnung. Zu diesem Zweck ist die Platte 5c, auf der der Schiebemechanismus 5 befestigt ist, mit der Rückwand 3b verbunden. Im vorliegenden Beispiel ist die Platte 5c L-förmig ausgebildet, so dass sie auf einfache Weise mit der Rückwand 3b bspw. verschraubt werden kann. Die Platte 5c hat zwei Langlöcher, mittels derer der sie auf einem Profilträger befestigbar ist. So kann die mit Hindernissen bestückte Rückwand 3b in ihrer Position gegenüber der Reservoir-Wand 1b und der Reservoir-Seitenwände 1c, 1d horizontal verändert werden, bspw. ebenfalls von 0 mm - 40 mm Gesamtbreite. Z.B. kann diese Position der Platte 5c mitsamt Rückwand 3b manuell einstellbar sein, oder mittels einer Aktorik wie z.B. einem weiteren Linearmotor. Dies ermöglicht es also, zusätzlich zur variablen Öffnungsbreite B der unteren Austrittsöffnung 1e, die durch die Unterkante der schrägen Seitenwand 1a begrenzt ist, die komplette Breite der Kammer 3 von 0 - 40 mm einstellen. Darüber hinaus kann die schräge Seitenwand 1a durch mithilfe des beweglichen Schlittenteils gegenüber der Rückwand 3b der Kammer 3 verschoben werden.

Die Kammer umfasst im gezeigten Beispiel auch eine Vorderwand 3a. In der Figur 3 ist angedeutet, wie die Vorderwand 3a vorne auf die Vorrichtung aufgesetzt wird. Die Vorderwand 3c kann Aussparungen aufweisen, durch die die als Vorsprünge ausgebildeten Hindernisse 4 hindurchragen können. So können die Hindernisse 4 mitsamt der Rückwand 3b verschoben werden, ohne durch die Vorderwand 3c in ihrer Bewegung eingeschränkt zu werden. Es kann auch vorgesehen sein, dass die Hindernisse 4 in die Rückwand 3b versenkbar ausgestaltet sind, um die Reduktion der Kammerbreite zu ermöglichen. In einer anderen Ausführung ist es auch denkbar, dass die Hindernisse feststehend ausgestaltet sind und die Vorderwand 3c keine Aussparungen aufweist. In einem solchen Fall ist die minimale Kammerbreite der Kammer 3 durch die Höhe der Hindernisse 4 vorgegeben, wobei bei einer Verbreiterung der Kammer ein Freiraum zwischen den Hindernissen 4 und der Vorderwand 3c entstehen kann.

Im vorliegenden Beispiel sind die Vorderwand 3c und die Rückwand 3b der Kammer 3 transparent ausgestaltet. So kann eine Beleuchtung sowie die Beobachtung mittels der optischen Erfassungsvorrichtung durch die Wände hindurch erfolgen - zum Beispiel die Beleuchtung durch die Rückwand, und die Erfassung durch die Vorderwand, oder umgekehrt.

Bei der Vorrichtung ist ein Neigungswinkel α der schrägen Seitenwand 1a des Reservoirs 1 verstellbar. Er lässt sich gegenüber der Vertikalen im Bereich von 5° bis 60° einstellen.

Unterhalb der unteren Austrittsöffnung 1e sind zwei Ablenkplatten 6 angeordnet, die dafür eingerichtet sind, das Pulver oder Schüttgut in Richtung der Hindernisse zu leiten. Die Rampen sind bspw. in Fig. 3 und besonders gut in Figuren 4a - 5 erkennbar. Die zwei Ablenkplatten 6 sind spiegelsymmetrisch zueinander angeordnet und bilden seitliche schräge Rutschen oder Rampen, die das Pulver oder Schüttgut trichterähnlich von der Seite in die Mitte der Vorrichtung leiten. Ein Neigungswinkel der beiden Platten ist dabei vorzugsweise einstellbar, wobei die Ablenkplatten 6 in der Regel symmetrisch eingestellt werden. In der Vorderwand 3c der Kammer 3 kann im oberen Bereich eine weitere Aussparung für die Ablenkplatten 6 vorgesehen sein, damit die Ablenkplatten 6 mitsamt der hinteren Seitenwand 3b und der Platte 5c nach vorne und nach hinten bewegt werden können, ohne von der Vorderwand 3c daran gehindert zu werden.

Figur 4a zeigt die Vorrichtung ohne Sieb, während Figur 4b ein Sieb 1f oder siebartiges Profil illustriert, das im Bereich der unteren Austrittsöffnung 1e angeordnet ist. Ein derartiges Sieb 1f oder alternativ oder zusätzlich auch ein andersartiges Profil, wie zum Beispiel ein Wellenprofil oder Zackenprofil, kann einsetzbar oder ausfahrbar sein, bspw. von hinten, ausgehend von der Rückwand 3b und der schrägen Seitenwand 1a und/oder von vorne, ausgehend von der Wand 1b und der Vorderwand 3c.

Die Kammer 3 ist als Ganzes neigbar, und zwar insbesondere nach hinten neigbar, so dass das aus der Austrittsöffnung 1e in die Kammer 3 fließende Pulver oder Schüttgut 2 an der Rückwand 3b der Kammer 3 entlanggleiten kann.

Fign. 6a und 6b illustrieren Aspekte der Durchführung von Versuchen mittels der zuvor beschriebenen und in Figuren 1-5 gezeigten Vorrichtung.

Bei solchen Versuchen, die Verfahren zur Bestimmung von Fließeigenschaften eines Pulvers oder Schüttguts in unterschiedlichen Strömungsregimes darstellen, wird die untere Austrittsöffnung 1e bspw. zunächst vollständig verschlossen, indem die Breite B auf 0 reduziert wird. Das Reservoir 1 wird mit dem Pulver oder Schüttgut 2 befüllt. Während eines Versuchsdurchlaufs wird dann mittels des Schiebemechanismus 5 die untere Austrittsöffnung 1e geöffnet und auf eine erste Breite eingestellt. Das Pulver oder Schüttgut 2 beginnt zu rieseln und gelangt über die Ablenkplatten 6 auf die Hindernisse 4, und wird von den Hindernissen 4 vereinzelt (siehe linke Abbildung, Fig. 6a). Dabei wird ein Strömungsmuster für die erste Breite mittels der optischen Erfassungsvorrichtung 7 erfasst. Beispielsweise deuten die dunkleren Bereiche eine höhere Geschwindigkeit an. Eine mit der optischen Erfassungsvorrichtung 7 verbundene Auswerteeinheit analysiert und/oder kategorisiert das erfassten Strömungsmuster.

Anschließend wird mittels des Schiebemechanismus die untere Austrittsöffnung 1e auf eine zweite Breite eingestellt und ein Strömungsmuster für die zweite Breite erfasst (mittleres Bild der Figur 6a). So wird beispielsweise die Breite B in den Fällen der Figuren 6a und 6b vom linken Bild zum rechten Bild jeweils sukzessive vergrößert und eine damit zusammenhängende Veränderung des Strömungsmusters von der Auswerteeinheit erkannt.

Nach der Durchführung des Versuchsdurchlaufs aus Figur 6a wird beispielsweise ein weiterer Versuchsdurchlauf gemäß Figur 6b durchgeführt, bei dem ein anderer Neigungswinkel der schrägen Seitenwand 1a eingestellt wird und außerdem der Luftdruck und die Temperatur verändert wurden. Im Fall von Figur 6b werden z.B. wieder die gleichen drei Breiten wie im Fall von Figur 6a verwendet. Beispielhaft zeigt aufgrund der geänderten Klimaparameter das Pulver oder Schüttgut 2 im Fall von Figur 6b eine schlechtere Fließfähigkeit als im Fall von Figur 6a.

### Bezugszeichenliste

- 1: Reservoir
- 1a: schräge Seitenwand
- 1b: gegenüberliegende Wand
- 1c: erste Seitenwand
- 1d: zweite Seitenwand
- 1e: untere Austrittsöffnung
- 1f: Sieb oder Profil

- L: Länge der unteren Austrittsöffnung
- B: Breite der unteren Austrittsöffnung

- 2: Pulver oder Schüttgut

- 3: Kammer
- 3a: Rahmenstruktur
- 3b: Rückwand
- 3c: Vorderwand
- 3d: erste Kammerseitenwand
- 3e: zweite Kammerseitenwand

- 4: Hindernisse

- 5: Schiebemechanismus
- 5a: Beweglicher Schlittenteil
- 5b: Feststehender Schlittenteil
- 5c: Platte

- 6: Leitblech

- 7: optische Erfassungsvorrichtung

- g: Gewichtskraft

## Patentansprüche

1. Vorrichtung zur Bestimmung von Fließeigenschaften eines Pulvers oder Schüttguts (2) in unterschiedlichen Strömungsregimes, umfassend
- ein Reservoir (1) zum Aufnehmen des Pulvers oder Schüttguts (2), mit einer schrägen Seitenwand (1a) und mit einer länglichen unteren Austrittsöffnung (1e),
- einen Schiebemechanismus (5) zum Verändern einer Breite (B) der unteren Austrittsöffnung (1e),
- eine unterhalb des Reservoirs (1) liegende Kammer (3), in der Hindernisse (4) unterhalb der unteren Austrittsöffnung (1e) so angeordnet sind, dass das durch die untere Austrittsordnung (1e) in die Kammer (3) fließende Pulver oder Schüttgut (2) mit den Hindernissen (4) interagiert,
- eine optische Erfassungsvorrichtung (7) zum Erfassen von Strömungsmustern des mit den Hindernissen interagierenden Pulvers oder Schüttguts (2).

2. Vorrichtung nach Anspruch 1, wobei eine Länge (L) der unteren Austrittsöffnung (1e) größer ist als die Breite (B) der unteren Austrittsöffnung (1e).

3. Vorrichtung nach einem der vorhergehenden Ansprüche, wobei der Schiebemechanismus (5) dafür eingerichtet ist, einen Abstand zwischen der schrägen Seitenwand (1a) und einer der schrägen Seitenwand (1a) gegenüberliegenden Wand (1b) zu verändern, um die Breite (B) der unteren Austrittsöffnung (1e) zu verändern.

4. Vorrichtung nach einem der vorhergehenden Ansprüche, wobei der Schiebemechanismus (5) dafür eingerichtet ist, eine Breite der unterhalb des Reservoirs (1) liegenden Kammer (3) zu verändern.

5. Vorrichtung nach einem der vorhergehenden Ansprüche, wobei eine Länge (L) der unteren Austrittsöffnung (1e) mindestens 1 cm und/oder höchstens 25 cm beträgt.

6. Vorrichtung nach einem der vorhergehenden Ansprüche, wobei die untere Austrittsöffnung (1e) durch den Schiebemechanismus (5) vollständig verschließbar ist und mittels des Schiebemechanismus (5) die Breite (B) auf mindestens 10 mm einstellbar ist, insbesondere auf stufenlose Weise.

7. Vorrichtung nach einem der vorhergehenden Ansprüche, wobei unterhalb der unteren Austrittsöffnung (1e) eine oder mehrere Ablenkplatten (6) angeordnet sind, die eingerichtet sind, das Pulver oder Schüttgut (2) in Richtung der Hindernisse (4) zu leiten, wobei die eine oder die mehreren Ablenkplatten (6) vorzugsweise bewegbar sind.

8. Vorrichtung nach einem der vorhergehenden Ansprüche, wobei ein Neigungswinkel (α) der schrägen Seitenwand (1a) des Reservoirs (1) verstellbar ist und/oder wobei der Neigungswinkel (α) der schrägen Seitenwand (1a) des Reservoirs (1) gegenüber der Vertikalen mindestens 5° und/oder höchstens 60° beträgt, bevorzugt mindestens 10° und höchstens 45° beträgt.

9. Vorrichtung nach einem der vorhergehenden Ansprüche, wobei im Bereich der unteren Austrittsöffnung (1e) ein Sieb (1f) angeordnet ist und/oder wobei im Bereich an einer Umrandung der unteren Austrittsöffnung (1e) ein Profil, insbesondere ein Zackenprofil oder Wellenprofil bereitstellbar ist.

10. Vorrichtung nach einem der vorhergehenden Ansprüche, wobei die Hindernisse (4) als Vorsprünge ausgebildet sind, die insbesondere an einer Rückwand (3b) der Kammer (3) angeordnet und/oder befestigt sind.

11. Vorrichtung nach einem der vorhergehenden Ansprüche, wobei die Kammer (3) neigbar ist, so dass das aus der Austrittsöffnung (1e) in die Kammer (3) fließende Pulver oder Schüttgut (2) an einer Rückwand (3b) der Kammer (3) entlanggleitet.

12. Vorrichtung nach einem der vorhergehenden Ansprüche, wobei eine Vorderwand (3c) und/oder eine Rückwand (3b) der Kammer (3) transparent ausgestaltet sind.

13. Vorrichtung nach einem der vorhergehenden Ansprüche, weiterhin eine mit der optischen Erfassungsvorrichtung (7) verbundene Auswerteeinheit umfassend, eingerichtet zum Analysieren und/oder Kategorisieren der erfassten Strömungsmuster.

14. Verfahren zur Verwendung der Vorrichtung nach einem der vorhergehenden Ansprüche, wobei die Breite (B) der unteren Austrittsöffnung (1e) sukzessive verändert wird.

15. Verfahren nach Anspruch 15, wobei die untere Austrittsöffnung (1e) zunächst vollständig verschlossen und das Reservoir (1) mit dem Pulver oder Schüttgut (2) befüllt wird,
wobei während eines Versuchsdurchlaufs mittels des Schiebemechanismus (5) die untere Austrittsöffnung (1e) geöffnet und auf eine erste Breite eingestellt wird und ein Strömungsmuster für die erste Breite erfasst wird, und wobei anschließend mittels des Schiebemechanismus die untere Austrittsöffnung (1e) vergrößert und auf eine zweite Breite eingestellt wird und ein Strömungsmuster für die zweite Breite erfasst wird und/oder wobei während eines Versuchsdurchlaufs oder zwischen zwei Versuchsdurchläufen ein Neigungswinkel der schrägen Seitenwand (1a) und/oder ein Neigungswinkel einer oder mehrerer Ablenkplatten (6), die unterhalb der unteren Austrittsöffnung (1e) angeordnet sind, verändert wird.
